Europäisches Patentamt

**European Patent Office**

**Office européen des brevets**

(11) Numéro de publication: **0 384 527 B1**

# FASCICULE DE BREVET EUROPEEN

(45) Date de publication de fascicule du brevet: **04.05.94** (51) Int. Cl.⁵: **G01S 3/784**, H04N 5/335

(21) Numéro de dépôt: **90200373.0**

(22) Date de dépôt: **19.02.90**

(54) **Dispositif de détermination de la direction du centre énergétique d'un objet lumineux.**

(30) Priorité: **24.02.89 FR 8902400**

(43) Date de publication de la demande:
**29.08.90 Bulletin 90/35**

(45) Mention de la délivrance du brevet:
**04.05.94 Bulletin 94/18**

(84) Etats contractants désignés:
**DE FR GB IT**

(56) Documents cités:
**EP-A- 0 178 954**
**EP-A- 0 265 302**
**FR-A- 2 569 842**

(73) Titulaire: **SOCIETE ANONYME D'ETUDES ET REALISATIONS NUCLEAIRES - SODERN**
**1 Avenue Descartes**
**F-94450 Limeil Brevannes(FR)**
(84) Etats contractants désignés:
**FR**

(73) Titulaire: **N.V. Philips' Gloeilampenfabrieken**
**Groenewoudseweg 1**
**NL-5621 BA Eindhoven(NL)**
(84) Etats contractants désignés:
**DE GB IT**

(72) Inventeur: **Falp, Benoit**
**Société Civile S.P.I.D.,**
**209 rue de l'Université**
**F-75007 Paris(FR)**
Inventeur: **Pezant, Christian**
**Société Civile S.P.I.D.,**
**209 rue de l'Université**
**F-75007 Paris(FR)**

(74) Mandataire: **Pyronnet, Jacques et al**
**Société Civile S.P.I.D.**
**156, Boulevard Haussmann**
**F-75008 Paris (FR)**

# Description

La présente invention concerne un procédé de détermination de la direction du centre énergétique d'un objet lumineux, au moyen d'un objectif formant dudit objet lumineux une image sur un détecteur photosensible.

L'invention trouve une application particulièrement avantageuse dans le domaine de la visée d'objets lumineux, comme le soleil par exemple, notamment pour le recalage de radars au sol ou pour contrôler l'attitude d'engins spatiaux sur leur orbite.

Parmi les dispositifs de détermination de la direction du centre énergétique d'un objet lumineux conformes au préambule, on connaît les viseurs solaires, qui utilisent comme détecteur photosensible une barrette unidimensionnelle à transfert de charges. Ce type de viseur présente cependant l'inconvénient de ne fournir qu'une seule information quant à la direction de l'objet lumineux visé, à savoir la position sur l'axe de la barrette du barycentre de la tache-image.

Afin de remédier à cet inconvénient, et donc dans le but d'obtenir les deux informations permettant de déterminer complètement la direction du centre énergétique de l'objet lumineux observé, on peut avoir recours à un détecteur photosensible constitué par une matrice à transfert de charges. Ces dispositifs, comme celui commercialisé par la Société Thomson-CSF sous la référence TH 7863, se présentent comme une mosaïque d'éléments d'image divisée en deux parties : une première moitié, la zone photosensible, est destinée à recevoir et à détecter le rayonnement lumineux venant de l'objet visé, et la deuxième moitié, recouverte d'un film opaque, sert de mémoire dans laquelle sont stockées, par transfert de charges, les informations reçues par la première moitié de la matrice. Cette réduction d'un facteur 2 de la surface du détecteur photosensible a pour conséquence de limiter le champ de visée, ce qui est particulièrement préjudiciable lorsqu'on veut réaliser un dispositif permettant de déterminer la direction d'un objet lumineux de façon autonome, c'est-à-dire sans l'assistance d'un équipement auxiliaire qui amènerait préalablement le viseur grossièrement dans la direction de l'objet recherché. Dans ce but, il convient de disposer du champ le plus large offert par la totalité de la surface de la matrice à transfert de charges en utilisant un détecteur identique mais dont la zone mémoire, non recouverte par un film opaque, peut alors également être utilisée comme zone photosensible. Toutefois, l'utilisation d'une telle matrice sans mémoire n'est pas envisageable du fait de l'apparition inévitable d'une traînée lumineuse verticale qui se superpose à l'image utile et qui, de ce fait, en diminue notablement le contraste.

En effet, à l'issue d'un temps, dit temps d'intégration, déterminé pour que la tache-image atteigne un niveau énergétique suffisant, la matrice est lue en transférant les lignes successives dans un registre de sortie intégré à ladite matrice. Or, comme le transfert des lignes et leur lecture dans le registre de sortie ne sont pas instantanés et que la matrice est éclairée en permanence, il se forme sur la zone photosensible une nouvelle image de l'objet lumineux à chaque cycle de lecture du registre de sortie. L'ensemble de ces images obtenues entre deux intégrations constitue ladite traînée lumineuse néfaste dont le temps d'intégration équivalent est égal au temps de lecture de la tache-image. En général, le temps de lecture de la tache-image n'est pas négligeable devant le temps d'intégration, surtout lorsque l'objet lumineux visé étant très intense comme le soleil, le temps d'intégration est relativement court. Il s'ensuit que la traînée lumineuse présente un éclairement suffisamment grand pour limiter le contraste de façon inacceptable. Aussi, le problème technique à résoudre par l'objet de la présente invention est de réaliser un dispositif de détermination de la direction du centre énergétique d'un objet lumineux, comportant un objectif formant dudit objet lumineux une image sur un détecteur photosensible, dispositif grâce auquel, en utilisant une matrice à transfert de charges sans mémoire comme détecteur photosensible, on pourrait éliminer en grande partie ladite traînée lumineuse de façon à améliorer la précision de la mesure de la position de l'image sur la matrice.

Selon la présente invention, ledit détecteur photosensible étant une matrice à transfert de charges sans mémoire de $N_l$ lignes et $N_c$ colonnes avec un registre de sortie de $N_c$ éléments, et la position du centre énergétique de l'image de l'objet lumineux étant déterminée par calcul barycentrique à l'intérieur d'une fenêtre entourant ladite image et couvrant $p_l \times p_c$ éléments de la matrice, ledit procédé est caractérisé en ce que :

- dans un premier mode de fonctionnement, dit mode de recherche, d'une part, ladite matrice est lue en groupant, dans le registre de sortie, les $N_l$ lignes m à m ($m < p_l$), tandis que, d'autre part, le registre de sortie est vidé en groupant, dans le dispositif de lecture de la matrice, I ($I < p_c$) éléments consécutifs du registre de sortie, de façon à déterminer la zone mx I la plus brillante de la matrice définissant la position approximative de l'image sur la matrice,

- dans un deuxième mode de fonctionnement, dit mode de mesure, qui suit le mode de recherche, la matrice est lue, d'abord, en groupant les lignes n à n ($n > p_l$), puis, ligne à ligne dans une zone de k lignes ($k > p_l$) située autour de ladite zone la plus brillante, et, enfin, à nouveau en groupant les lignes n à n jusqu'à épuisement des $N_l$ lignes.

Ainsi, en mode de mesure, le fait de transférer à la suite n lignes consécutives avant de lire le résultat de leur accumulation dans le registre de sortie, et ceci lorsqu'on se trouve hors de la zone lue ligne à ligne, conduit à une réduction très sensible de la traînée et donc améliore nettement le contraste de l'image. En effet, si TV est le temps de transfert d'une ligne de la matrice et TH le temps de transfert d'un élément du registre de sortie, le temps d'intégration de la traînée, dans le cas d'une lecture ligne à ligne de la matrice, est donné par :

$$y_l(TV + N_cTH) \simeq y_l N_c TH$$

où $y_l$ est le nombre de lignes couvertes par l'image de l'objet lumineux. Dans une lecture par paquets de n lignes $(n > y_l)$, la traînée est constituée :

- d'une traînée proprement dite, uniforme, dont le temps d'intégration est :

$$y_l TV$$

- et d'une succession d'images parasites au pas de n et dont le temps d'intégration est :

$$N_c TH$$

Cependant, étant situées en dehors de la fenêtre de mesure, ces images parasites ne sont pas gênantes et n'interviennent pas dans le contraste. Le rapport d'éclairement entre la traînée "ligne à ligne" et la traînée "n à n" est donc :

$$N_c TH/TV \text{ soit } N_c \text{ si } TV \simeq TH$$

Dans le cas de la matrice Thomson-CSF TH 7863, $N_c$ vaut 384. L'éclairement de la traînée dans le cas de la lecture des lignes de la matrice n à n est donc pratiquement négligeable, d'où un contraste maximum de la tache-image, et ceci sans avoir recours à un obturateur mécanique qui se ferme en dehors du temps d'intégration.

Il faut noter que la lecture des lignes n à n, n'est possible que dans la mesure où l'on sait qu'avant et après la zone image, aucune information utile n'est présente, et que l'on sait par ailleurs, grâce au résultat de localisation grossière de l'image tiré du fonctionnement en mode de recherche, à quel moment il convient d'arrêter ou de reprendre la lecture par paquets de n lignes.

D'autre part, le dispositif selon l'invention présente l'avantage supplémentaire de diminuer notablement le temps de lecture de la matrice. A titre d'exemple, on se placera dans le cas de la matrice TH 7863 déjà mentionnée qui comporte au total $N_l$ = 576 lignes. Pour une lecture ligne à ligne, le temps de lecture de la matrice est :

$$576(TV + 384TH) \simeq 576 \times 384 \times TH$$

Pour une lecture par paquets de n = 15 lignes et avec une zone de lecture ligne à ligne de k = 15 lignes, le temps de lecture de la matrice vaut approximativement :

$$37(15TV + 384TH) + 15(TV + 384TH) = 576 \times TV + 52 \times 384 \times TH \simeq 52 \times 384 \times TH$$

Le gain en temps de lecture est donc de 576/52 soit de l'ordre de 11. La conséquence intéressante de cette réduction du temps de lecture total de la matrice est la possibilité d'augmenter la fréquence de récurrence du dispositif selon l'invention.

La description qui va suivre en regard des dessins annexés, donnés à titre d'exemples non limitatifs, fera bien comprendre en quoi consiste l'invention et comment elle peut être réalisée.

La figure 1 montre en perspective un schéma d'un dispositif de détermination de la direction du centre énergétique d'un objet lumineux, conforme à l'invention.

La figure 2 représente une matrice à transfert de charges mise en oeuvre dans le dispositif de la figure 1.

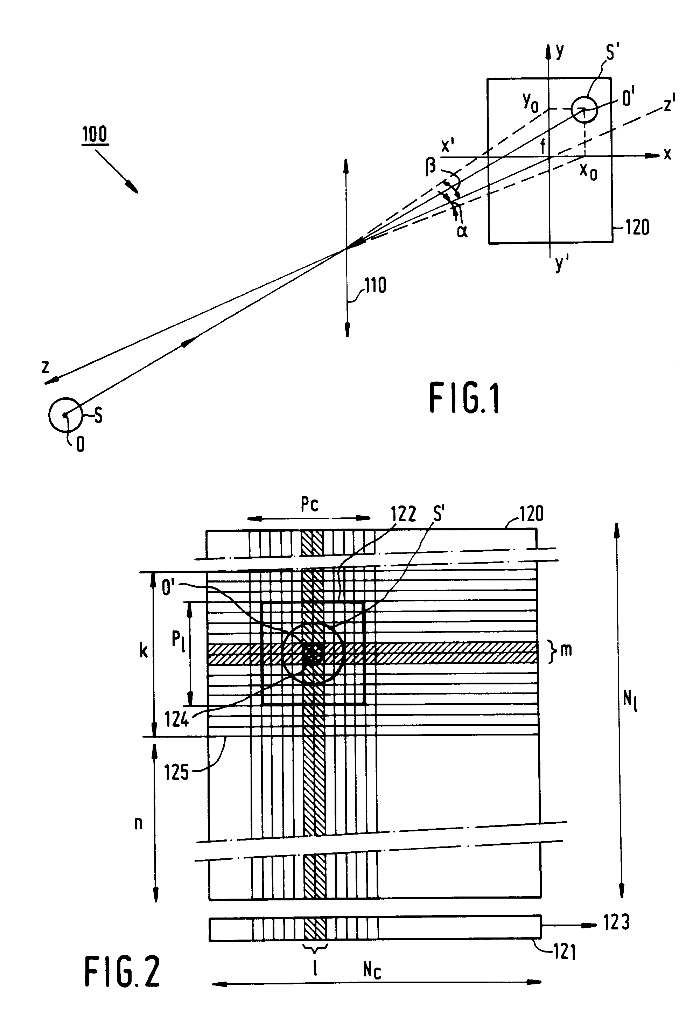

La figure 1 montre de façon schématique un dispositif 100 de détermination de la direction du centre énergétique O d'un objet lumineux S, comme le soleil par exemple. Ce dispositif 100 comporte un objectif 110, éventuellement muni d'un diaphragme non représenté, qui forme de l'objet lumineux S une image S′ de centre O′ sur un détecteur photosensible 120. Dans le cas du dispositif montré à la figure 1, le détecteur photosensible 120 est une matrice à transfert de charges placée au foyer F de l'objectif 110, comme dans le cas du soleil, ou dont la position par rapport à l'objectif est ajustée, par défocalisation, de telle manière que le diamètre de la tache-image de l'objet lumineux atteigne quelques éléments d'image, dans le cas de très petits objets. Le centre énergétique O′ de l'image S′ est repéré par ses coordonnées $x_0$ et $y_0$ dans un système d'axes Fx, Fy lié à la matrice. La détermination de $x_0$ et $y_0$ permet de calculer les angles $\alpha$ et $\beta$ définissant la direction O′O recherchée par rapport à l'axe optique z′z de l'objectif 110.

Comme l'indique la figure 2, la matrice 120 comporte $N_l$ lignes et $N_c$ colonnes avec un registre 121 de sortie de $N_c$ éléments. La matrice TH 7863 de la Société Thomson-CSF utilisée par la demanderesse est constituée de $N_l$ = 576 lignes et $N_c$ = 384 colonnes sans zone mémoire. Si cela est nécessaire la matrice 120 peut être refroidie par un module à effet Peltier, ce sera le cas notamment lorsque le courant d'obscurité est trop important.

La position du centre énergétique O' de l'image S' de l'objet lumineux S est déterminée, conformément à la figure 2, par calcul barycentrique à l'intérieur d'une fenêtre 122 entourant l'image S' et couvrant $P_lxP_c$ éléments de la matrice 120.

A titre d'exemple, on peut indiquer qu'avec la matrice mentionnée ci-dessus de 16 mm de diagonale et un objectif de 11,5 mm le dispositif 100 offre un champ de 72°, ce qui est tout à fait remarquable, de même que le rapport entre le champ et la précision de détermination de la position moyenne de l'objet lumineux pendant l'intégration, ce rapport valant 17000 pour une précision de 15″. Le diamètre angulaire du soleil étant de l'ordre de 30′ d'arc et un élément d'image de la matrice mesurant environ 22 $\mu$m, l'image géométrique du soleil apparaît comme un disque de $y_l$ = 4,5 à 5 éléments d'image de diamètre. La tache de diffraction, selon l'ouverture du diaphragme, peut atteindre 1,5 élément d'image, ce qui conduit à une image du soleil de 6,5 éléments d'image. La fenêtre 122 de mesure (ensemble des éléments sur lequel est calculé le barycentre énergétique de l'image) qui entoure l'image S' est formé par un minimum de 8x8 éléments d'image. On peut donc prendre pour fenêtre 122 un carré de $p_l$ = 10 lignes et $p_c$ = 10 colonnes. Le système décrit offre aussi la possibilité après "accrochage" initial de suivre l'objet lumineux de manière autonome, c'est-à-dire sans assistance extérieure, pour des mouvements pouvant atteindre quelques °/s.

Le dispositif proposé présente un premier mode de fonctionnement, dit mode de recherche, au cours duquel on détermine une zone 124 de m lignes et l colonnes de signal maximum préfigurant la position approximative du soleil sur la matrice. m et l sont respectivement inférieurs à $p_l$ et $p_c$ et peuvent être pris égaux à 2 par exemple. La détermination de la zone mxl 124 la plus brillante est réalisée en lisant les $N_l$ lignes de la matrice 120 en les groupant m à m dans le registre 121 de sortie, puis en vidant l éléments d'image consécutifs dudit registre de sortie dans le dispositif de lecture 123 de la matrice. Cette opération a l'avantage de réduire d'un facteur mxl, ici 4, le temps d'intégration nécessaire pour obtenir un signal exploitable en mode de recherche. Il faut également ajouter que, dans le cas notamment d'une utilisation au sol du dispositif selon l'invention, le mode de recherche a pour but d'adapter le diaphragme de l'objectif et le temps d'intégration sur la matrice à transfert de charges en fonction du signal reçu dont le niveau peut être très variable selon la couverture nuageuse et l'heure d'observation par exemple.

Au cours du deuxième mode de fonctionnement, le mode de mesure qui suit le mode de recherche, la matrice 120 est exposée au rayonnement du soleil pendant le temps d'intégration et avec le diaphragme déterminés lors de la recherche. La matrice est ensuite lue, d'abord en groupant les lignes n à n avec n>$p_l$, à titre indicatif, une valeur typique de n est 15. Puis, dans une zone 125 située autour de la zone mxl 124 la plus brillante, la lecture de la matrice 120 est effectuée ligne à ligne pendant k lignes. k est également supérieur à $p_l$ et peut être choisi supérieur ou égal à n, ici k varie de 15 à 30. Enfin, la matrice est à nouveau vidée en groupant les lignes n à n jusqu'à épuisement des $N_l$ lignes.

On a vu plus haut que le mode de mesure ainsi mené conduit à une amélioration très sensible du contraste de l'image et, en réduisant le temps de lecture, autorise une fréquence de récurrence accrue.

## Revendications

1. Procédé de détermination de la direction du centre énergétique d'un objet lumineux, au moyen d'un objectif formant dudit objet lumineux une image sur un détecteur photosensible, ledit détecteur photosensible étant une matrice à transfert de charges sans mémoire de $N_l$ lignes et $N_c$ colonnes avec un registre de sortie de $N_c$ éléments, procédé selon lequel la position du centre énergétique de l'image de l'objet lumineux est déterminée par calcul barycentrique à l'intérieur d'une fenêtre entourant ladite image et couvrant $p_lxp_c$ éléments de la matrice, ledit procédé étant caractérisé en ce que :

 - dans un premier mode de fonctionnement, dit mode de recherche, d'une part, ladite matrice est lue en groupant, dans le registre de sortie, les $N_l$ lignes m à m (m<$p_l$), tandis que, d'autre part, le registre de sortie est vidé en groupant, dans le dispositif de lecture de la matrice, l (l<$p_c$) éléments consécutifs du registre de sortie, de façon à déterminer la zone m×l la plus brillante de la matrice définissant la position approximative de l'image sur la matrice,

 - dans un deuxième mode de fonctionnement, dit mode de mesure, qui suit le mode de recherche, la matrice est lue, d'abord, en groupant les lignes n à n (n>$p_l$), puis, ligne à ligne dans une zone de k lignes (k>$p_l$) située autour de ladite zone la plus brillante, et, enfin, à nouveau en groupant les lignes n à n jusqu'à épuisement des $N_l$ lignes.

## Claims

1. A method of determining the direction of the energy centre of a luminous object by means of a lens forming an image of said luminous object on a photo-sensitive detector, said photo-sensitive detector being a charge-transfer matrix without memory having $N_l$ lines and $N_c$ columns with an output register of $N_c$ elements, in which method the position of the energy centre of the image of the luminous object is determined by barycentric calculation within a window surrounding said image and covering $p_l \times p_c$ elements of the matrix, said method being characterized in that:

   - in a first mode of operation, denoted the search mode, said matrix is read by grouping the $N_l$ lines m-by-m ($m<p_l$) in the output register, whereas the output register is emptied by grouping l ($l<pc$) consecutive elements of the output register in the read arrangement of the matrix, in order to determine the brightest area mxl of the matrix defining the approximate position of the image on the matrix,

   - in a second mode of operation, denoted the measuring mode, which follows the search mode, the matrix is first read by grouping the lines n-by-n ($n>p_l$), thereafter fine by line in an area of k lines ($k>p_l$) located around said brightest area, and finally by again grouping the lines n-by-n until all the $N_l$ lines have been used up.

## Patentansprüche

1. Verfahren zum Feststellen der Richtung des Energiezentrums eines Licht strahlenden Gegenstandes mittels eines Objektivs, das von dem genannten Licht strahlenden Gegenstand auf einem photoempfindlichen Detektor ein Bild erzeugt, wobei der photoempfindliche Detektor eine speicherlose Ladungstransfer-Matrix von $N_l$ Zeilen und $N_c$ Spalten mit einem Ausgangsregister von $N_c$ Elementen ist, und wobei nach diesem Verfahren die Position des Energiezentrums des Bildes des Licht strahlenden Gegenstandes durch Schwerpunktberechnung innerhalb eines das betreffende Bild umgebenden und $p_l{}^*p_c$ Elemente der Matrix bedeckenden Fensters ermittelt wird, wobei das genannte Verfahren das Kennzeichen aufweist, daß

   - in einer ersten Betriebsaat, die als Untersuchungsbetriebsart bezeichnet wird, einerseits die genannte Matrix dadurch ausgelesen wird, daß in dem Ausgangsregister die $N_l$ Zeilen m-zu-m ($m<p_l$) gruppiert werden, während andererseits das Ausgangsregister dadurch geleert wird, daß l ($l<p_c$) aufeinanderfolgende Elemente des Ausgangsregisters in der Leseanordnung der Matrix gruppiert werden, so daß die hellste Zone m*l der Matrix ermittelt wird, welche die etwaige Position des Bildes auf der Matrix bestimmt,

   - in einer zweiten Betriebsart, die als Meßbetriebsart bezeichnet wird und der Untersuchungsbetriebsart folgt, die Matrix zunächst dadurch ausgelesen wird, daß die Zeilen n-zu-n ($n>p_l$) gruppiert werden, danach zeilenweise in einer Zone von k Zeilen ($k>p_l$) um die genannte hellste Zone herum liegend, und zum Schluß wieder durch Gruppierung der Zeilen z-zu-n bis alle $N_l$ Zeilen verbraucht sind.

FIG.1

FIG.2

6